Europäisches Patentamt

European Patent Office

Office européen des brevets

(19)

(11) Veröffentlichungsnummer: **0 121 759**
**B1**

(12) # EUROPÄISCHE PATENTSCHRIFT

(45) Veröffentlichungstag der Patentschrift:
01.06.88

(21) Anmeldenummer: **84102366.6**

(22) Anmeldetag: **05.03.84**

(51) Int. Cl.⁴: **C 08 J 3/08, C 09 D 3/80**

(54) Verfahren zur Herstellung lagerstabiler Plastisole und Organosole.

(30) Priorität: **12.03.83 DE 3308925**

(43) Veröffentlichungstag der Anmeldung:
**17.10.84 Patentblatt 84/42**

(45) Bekanntmachung des Hinweises auf die Patenterteilung:
**01.06.88 Patentblatt 88/22**

(84) Benannte Vertragsstaaten:
**AT BE DE FR GB NL**

(56) Entgegenhaltungen:
**BE - A - 646 834
DE - A - 2 928 928
FR - A - 2 291 248
GB - A - 839 204**

**Die Akte enthält technische Angaben, die nach dem
Eingang der Anmeldung eingereicht wurden und die
nicht in dieser Patentschrift enthalten sind.**

(73) Patentinhaber: **BASF Aktiengesellschaft,
Carl-Bosch-Strasse 38, D-6700 Ludwigshafen (DE)**

(72) Erfinder: **Blum, Rainer, 58 Bannwasserstrasse,
D-6700 Ludwigshafen (DE)**
Erfinder: **Osterloh, Rolf, Dr., Am Wehrhaus 16 a,
D-6718 Gruenstadt (DE)**

### Beschreibung

Die Erfindung betrifft ein Verfahren zur Herstellung lagerstabiler Dispersionen aus feinteiligen Kunstharzen in Weichmachern, sogenannte Plastisole und Organosole.

Als Plastisole werden zweiphasige Systeme aus Kunststoff- bzw. Kunstharzteilchen und Weichmacher bezeichnet. Die Kunststoff- bzw. Kunstharzteilchen bilden dabei die innere und der Weichmacher die äussere kontinuierliche Phase einer Dispersion.

Wesentliches Merkmal der Plastisole ist, dass bei üblichen raumtemperaturnahen Lagerbedingungen die Phasentrennung soweit erhalten bleibt, dass ein fliessfähiger Dispersionszustand gegeben ist. Dabei kann die Viskosität der Dispersionen von dünnflüssig bis pastös reichen. Weiteres wesentliches Merkmal der Plastisole ist, dass sie beim Erwärmen in einen nicht mehr fliessfähigen Zustand übergehen, der von sprödhart bis weichzäh-klebrig reichen kann.

Diese Zustandsänderung wird in der Fachsprache mit Gelierung oder Gelatinierung bezeichnet.

Dabei nehmen die Kunststoff- bzw. Kunstharzteilchen den Weichmacher auf, bis sie sich berühren und verkleben. Diese Zustandsänderung bleibt auch beim Abkühlen irreversibel.

Die gelierten Plastisole können dann homogene Massen sein oder, wenn der Weichmacher die Kunststoffteilchen nicht gleichmässig durchdrungen hat, auch gewisse Inhomogenitäten aufweisen, ohne dass dadurch ihre Gebrauchstüchtigkeit eingeschränkt werden muss. Als Weichmacher kann jede Flüssigkeit bezeichnet werden, die als Partner eines Kunststoffes bzw. Kunstharzes die Bedingungen für ein Plastisol erfüllt; wichtig ist eine sehr geringe Flüchtigkeit, da sonst bei Lagerung der ausgelierten Plastisole der Weichmacher allmählich entweichen könnte und unerwünschte Eigenschaftsveränderungen aufträten.

Technisch wichtige Flüssigkeiten, die die Bedingungen von Weichmachern erfüllen und grosse Anwendung finden, sind die Ester der Phthal-, Adipin-, Sebacin- und Phosphorsäure, chlorierte Kohlenwasserstoffe, flüssige Polyester und epoxidierte natürliche Öle wie Leinöl oder Sojaöl.

Ausführliche Definitionen des Begriffs Weichmacher und der chemisch-physikalischen Wechselwirkung zwischen Weichmacher und Kunststoff- bzw. Kunstharzteilchen gibt K. Weinmann in «Beschichten mit Lacken und Kunststoffen» (Verlag W.A. Colomb, Stuttgart 1967), Seite 47 bis 158.

Zur Regulierung der Verarbeitungseigenschaften können den Plastisolen gewisse Anteile flüchtiger Lösemittel zugesetzt werden. Bei mehr als ca. 5 bis 10% flüchtige Lösemittel bezeichnet man die Plastisole auch als Organosole, wobei die Grenzen zwischen Plastisolen und Organosolen nicht scharf definiert sind (vgl. auch H.A. Sarvertnick, «Plastisols and Organosols», von Nostrand Reinhold Company, New York 1972, Seite 201 und K. Weinmann «Beschichten mit Lacken und Kunststoffen», Verlag W.A. Colomb, Stuttgart 1967, Seite 21).

Theoretisch kann durch geeignete Wahl der Bestandteile jedes polymere Harz in ein Plastisol überführt werden. In der Praxis hat sich sowohl die technische Anwendung als auch die technische Literatur fast ausschliesslich auf die Verwendung von Polyvinylchlorid zur Bildung von Plastisolen in dem Masse konzentriert, dass beim Ausdruck «Plastisol» in Chemical Abstracts auf «Polyvinylchlorid» verwiesen wird, und in vielen Fachbüchern Plastisole als Suspensionen von Polyvinylchloridharz beschrieben werden.

Diese beherrschende Stellung von Polyvinylchlorid (= PVC) auf dem praktischen und technischen Plastisolgebiet rührt daher, dass für zahlreiche Polymerisate mit sonst äusserst vorteilhaften und erwünschten Eigenschaften keine geeigneten Weichmacher gefunden werden können, weil entweder Dispersionen mit ungeeigneter Viskosität und Lagerstabilität erhalten werden oder die Weichmacher aus den gelierten Plastisolen wieder ausschwitzen.

Ein anderes Prinzip wird für ein Vinylfluorid-Polymerisat beschrieben.

In der DE-PS 1 544 758 (Äquivalenzschrift zu BE-A 646 834) werden keine Plastisole beschrieben, sondern Dispersionen eines Polymerisates von Vinylfluorid in einer organischen Flüssigkeit, die bei Raumtemperatur keine wesentliche lösende Wirkung ausübt.

Bei erhöhter Temperatur schmelzen die Polymerteilchen zu einem kontinuierlichen polymeren Gebilde unter gleichzeitiger Verdunstung der organischen Flüssigkeit.

Die organische Flüssigkeit ist daher nicht Teil eines gelierten Polymeren, wie bei den Plastisolen.

Da sich die Vinylfluorid-Polymerisatteilchen aus einer Dispersion in einem organischen flüssigen Medium absetzen, wurde durch die Verwendung von polymeren Verdickungsmitteln die Dispersion stabilisiert.

Besonders wünschenswert wäre es, die Harze der Acryl- und Vinylesterpolymerisate und Copolymerisate für Plastisole einzusetzen, zeigen sie doch gegenüber PVC eine ganze Reihe von Vorteilen, z.B. können durch die freie Wahl der Monomeren die Eigenschaften der Copolymeren breit variiert werden. Ein ganz erheblicher Nachteil des PVC's, den Acryl- und Vinylpolymerisate nicht zeigen, ist seine Instabilität, die zu Versprödung, Salzsäureabspaltung und Verfärbung führt und die Mitverwendung von z.T. hochgiftigen sog. Stabilisatoren, wie z.B. Blei- und Cadmiumverbindungen, notwendig macht.

Der Wunsch Acrylatplastisole zu formulieren, führte in den letzten Jahren zu einer Reihe von Patentanmeldungen. In den DE-PS 2 454 235 (Äquivalenz zur FR-A 2 291 248) und 2 529 732 wird eine Problemlösung durch Einsatz von Acrylpolymerisaten mit einer $Tg > 35°$ mit einer Abstimmung von Tg, Teilchengrösse und Zusammensetzung des dispergierten Polymerteilchens und speziellen Weichmachermischungen versucht.

Damit gelingt jedoch nur eine unvollkommene Problemlösung. Das Ziel wird hierin bereits dadurch schon als erreicht angesehen, wenn die Viskosität der Plastisole in acht Tagen nicht mehr als um den Faktor 3 ansteigt.

In der US-PS 4 071 653 sowie in den DE-PS 2 543 542, 2 722 752 und 2 949 954 werden speziell aufgebaute Methacrylatteilchen beschrieben, die dadurch, dass sie aus einem besonders gut weichmacherverträglichen Kern und einer schlecht weichmacherverträglichen Schale aufgebaut sind, gute Lagerstabilität sowohl des flüssigen als auch des ausgelierten Plastisols zeigen. Den US-PS 4 176 028, GB-PS 1 598 589, GB-PS 1 598 579, DE-PS 2 812 014, 2 812 015 und 2 812 016 ist die Verwendung polymerer Salze der Acryl- oder Methacrylsäure, die dort als Polyelektrolyte bezeichnet werden, zu entnehmen.

Kennzeichen all dieser Versuche, Acrylpolymerisate zu Plastisolen zu verarbeiten ist, dass sie auf eine sehr spezielle Auswahl der Rohstoffe angewiesen sind, wodurch die Einsatzfähigkeit der erhaltenen Dispersionen bzw. der daraus durch Gelierung resultierenden Plastigele eingeschränkt wird.

Aufgabe der vorliegenden Erfindung ist es, diese Nachteile zu vermeiden und bei weitgehend freier Wahl der Polymerisatzusammensetzung und des Weichmachers bei Raumtemperatur lagerstabile Plastisole zu erhalten.

Die vorliegende Erfindung zeigt, dass es überraschenderweise möglich ist, innerhalb der oben aufgezeigten Rahmenbedingungen für Plastisole und Organosole, Vinylestercopolymerisate, (Meth)acrylestercopolymerisate und Weichmacher in freier Auswahl zu Plastisolen und Organosolen zu kombinieren, und zwar dadurch, dass die Dispersionen mit Schutzkolloiden bei üblichen raumtemperaturnahen Lagerbedingungen stabilisiert werden, mit der Massgabe, dass die Stabilisierung bei der Gelierung bei erhöhter Temperatur aufgehoben wird und die als Stabilisator dienenden Schutzkolloide in das resultierende Plastigel integriert werden.

Gegenstand der vorliegenden Erfindung ist ein Verfahren zur Herstellung von bei Raumtemperatur lagerstabilen Plastisolen auf Basis von Gemischen aus feinteiligen Kunstharzen und Weichmachern, die gegebenenfalls zusätzlich Pigmente, Füllstoffe, flüchtige organische Lösungsmittel und weitere Hilfsstoffe enthalten, das dadurch gekennzeichnet ist, dass Dispersionen von feinteiligen Vinylestercopolymerisaten und/oder (Meth)acrylestercopolymerisaten in Weichmachern, die für sich bei Raumtemperatur nicht lagerstabil sind, nichtreaktive und/oder reaktive Schutzkolloide oder Emulgatoren oder Gemische von Schutzkolloiden und Emulgatoren zugefügt werden und so bei Raumtemperatur lagerstabile Dispersionen erhalten werden.

Die erfindungsgemässen Dispersionen können als feinteilige Kunstharze Copolymerisate von (Meth)acrylverbindungen, wie z.B. solche, die überwiegend aus einpolymerisierten Einheiten von Acrylsäureestern, Methacrylsäureestern und/oder Acrylnitril aufgebaut sind, wobei diese Acryl- und Methacrylverbindungen teilweise durch andere Acryl- oder Methacrylmonomere, durch Vinylaromaten, sowie in untergeordneten Mengen durch andere mit (Meth-)acrylsäureestern copolymerisierbare olefinisch ungesättigte Monomere ersetzt sein können, oder Vinylestercopolymerisat enthalten.

Die erfindungsgemäss zu verwendenden feinteiligen Kunstharze können auch Gemische aus (Meth-)acrylcopolymerisaten und Vinylestercopolymerisaten enthalten, wobei die feinteiligen Kunstharze für sich allein, ohne den Zusatz von Dispersionsstabilisatoren, mit den Weichmachern nur teilweise lagerstabile oder keine lagerstabilen Dispersionen bilden.

Ebenso eignen sich als feinteilige Kunstharze solche, die saure Gruppen, vorzugsweise Carboxylgruppen enthalten und eine Säurezahl von mindestens 5 aufweisen, wobei als Dispersionsstabilisatoren basische Schutzkolloide und/oder basische Emulgatoren verwendet werden können.

Desgleichen eignen sich als feinteilige Kunstharze solche, die basische Gruppen enthalten und eine Aminzahl von mindestens 5 aufweisen, wobei als Dispersionsstabilisatoren saure Schutzkolloide und/oder saure Emulgatoren verwendet werden können.

Die nach dem erfindungsgemässen Verfahren hergestellten Plastisole und Organosole enthalten feinteilige Kunstharze bestimmter Zusammensetzung, Schutzkolloide, Weichmacher und im Falle von Organosolen auch flüchtige Lösemittel.

Feinteilige Kunstharze im Sinne der Erfindung sind im allgemeinen Kunststoffteilchen oder Kunstharzteilchen von 0,05 bis 500µm Teilchengrösse. Die als mittlerer Durchmesser der Teilchen ausgedrückte Teilchengrösse ist nicht kritisch, liegt jedoch für den üblichen praktischen Betrieb vorzugsweise im Bereich von 0,1 bis 20µm und insbesondere im Bereich von 0,5 bis 10µm. Die erwünschte Teilchengrösse in einem gegebenen Fall wird teilweise durch die gewünschten Eigenschaften des Endprodukts und die anzuwendenden Formgebungsverfahren bestimmt. Sehr kleine Teilchen von beispielsweise weniger als 0,1µm sind zwar geeignet, jedoch erfordern sie aufgrund ihrer grossen Oberfläche grosse Weichmachermengen um z.B. eine gewünschte niedrige Viskosität einzustellen. Dies führt zu einem möglicherweise ungünstigen Verhältnis von Polymerisat und Weichmacher im ausgelierten Produkt.

Sehr grosse Teilchen können die kleinste Dicke von Überzügen begrenzen, die aus Dispersionen, die diese Teilchen enthalten, hergestellt werden können. Sie können ferner für das Verschmelzen oder Zusammenfliessen Zeiten erfordern, die uninteressant lang und/oder unzweckmässig sind. Teilchengrössen im gewünschten Bereich in einem gegebenen Fall können entweder direkt durch Wahl eines geeigneten Polymerisationsverfahrens oder durch Mahlen grosser Teilchen zur Bildung kleinerer Teilchen in bekannten Apparaturen und nach bekannten Verfahren erhalten werden.

Zu den Aufbaukomponenten der erfindungsgemäss herzustellenden Dispersionen ist im einzelnen folgendes auszuführen.

Bei den anspruchsgemässen feinteiligen Kunstharzen handelt es sich um Copolymere auf Basis polymerisierbarer ungesättigter Monomeren.

Im allgemeinen Sprachgebrauch werden ungesättigte Monomere je nach Stellung der polymerisierbaren Bindung im Molekül bestimmten begriffen wie vinylisch, acrylisch, allylisch, olefinisch u.a. zugeordnet.

Die Möglichkeit, auf Basis solcher unterschiedlicher Monomeren Copolymere herzustellen, werden dabei durch die Copolymerisationsparameter (vgl. z.B. Journal of Polymer Science Vol. 54, Pages 411–455, 1961) vorgegeben.

Die im Rahmen dieser Vorgaben getroffene Auswahl unter den Monomeren, aus denen die zur Herstellung der erfindungsgemässen Plastisole geeigneten Kunststoffteilchen hergestellt werden, bezieht sich auf die gewünschten Eigenschaften des aus dem Plastisol durch Gelierung erhaltenen Endproduktes.

Besonders vorteilhaft ist es, zur Herstellung der erfindungsgemässen Plastisole solche Kunstharze zu verwenden, die einen Anteil an sauren oder basischen Gruppen im Polymermolekül enthalten.

Bevorzugte saure Gruppen sind Carboxylgruppen. Bevorzugte basische Gruppen sind primäre, sekundäre und tertiäre Aminogruppen. Die sauren bzw. basischen Gruppen können durch Copolymerisation saurer oder basischer Monomere mit anderen Monomeren oder durch chemische Umsetzungen an säure- oder basenfreier Polymeren eingeführt werden; auch Kombination dieser beiden Methoden ist möglich.

Saure Monomere sind z.B. olefinisch ungesättigte Mono- und Dicarbonsäuren und die Monoester dieser Dicarbonsäuren mit Alkoholen mit 1 bis 20 C-Atomen. Als Beispiele für technisch leicht zugängliche und deshalb bevorzugte saure polymerisierbare Monomere seien Acrylsäure, Methacrylsäure, Maleinsäure und Halbester der Maleinsäure mit Alkoholen mit 1 bis 20, vorzugsweise 2 bis 8 C-Atomen genannt.

Basische copolymerisierbare Monomere sind z.B. die Ester von Acrylsäure und Methacrylsäure mit 1 bis 20 C-Atome enthaltenden Alkanolaminen.

Technisch leicht zugängliche und bevorzugte Verbindungen dieser Art sind z.B. Diethylaminoethyl(meth-)acrylat und Dimethylaminoethyl-(meth-)acrylat.

Beispiele für polymeranaloge Umsetzungen, durch die in carboxylgruppenfreie Polymere Carboxylgruppen eingeführt werden können, sind die Umsetzung von im Copolymerisat enthaltenen Dicarbonsäureanhydridgruppen mit Alkoholen oder Wasser. Dicarbonsäureanhydridhaltige Polymere werden z.B. erhalten durch Copolymerisation von Maleinsäureanhydrid mit zur Copolymerisation geeigneten Comonomeren unter Beachtung der Copolymerisationsparameter.

Polymeranaloge Umsetzungen, durch die basische Gruppe im Polymere eingeführt werden können, sind z.B. die Hydrazinolyse von Polyacrylaten wie sie in «Organic Coatings + Applied Polymer Science» 46, 1982, beschrieben wird, und die Amidisierung carboxylgruppenhaltiger Polymere wie sie der DE-OS 3 043 355 zu entnehmen ist.

Zur Herstellung der erfindungsgemässen Plastisole stellt die Tg (= Glastemperatur) der Polymerteilchen keine kritische Grösse dar. Weil jedoch zur Herstellung fliess- bzw. rakelbarer Plastisole ein Weichmacheranteil von ca. $\geq$ 30% notwendig ist, werden aus Polymerisaten mit einer Tg < 80°C im allgemeinen keine klebfreien Plastigele erhalten.

Für gewisse Änderungen, z.B. Klebstoffe und Abdichtmaterialien, bei denen eine Klebrigkeit der Endprodukte erwünscht ist, können jedoch Polymerisate mit Tg ca. < 80°C vorteilhaft sein, d.h. bezüglich der Tg der Polymerteilchen erfolgt die Auswahl nach den gewünschten Eigenschaften des Endproduktes und dessen Verwendung.

Die Herstellung der feinteiligen Kunstharze kann nach üblichen Methoden erfolgen, beispielsweise durch Substanzpolymerisation, Emulsionspolymerisation, Suspensionspolymerisation oder Fällungspolymerisation.

Bevorzugtes Herstellverfahren für feinteilige Kunstharze ist die Polymerisation in wässriger Dispersion unter anschliessender Verdampfung des Wassers durch Sprühtrocknung. Dieses Verfahren ist im allgemeinen nur anwendbar, wenn die Glasübergangstemperatur (Tg) des Polymerisates hoch genug liegt. Polymere mit niedriger Glastemperatur lassen sich ebenfalls aus Dispersionen gewinnen, z.B. durch Fällung oder Gefriertrocknung, wobei es möglich ist, die erhaltenen Teilchen durch Zugabe geeigneter Hilfsmittel, z.B. Talkum oder feinteiliger Kieselsäure, am Verkleben zu hindern.

Herstellung, chemische Zusammensetzung, Kornform, Korngrösse und Korngrössenverteilung der in den erfindungsgemässen Plastisolen und Organosolen eingesetzten Acrylatpolymerteilchen ist nicht Gegenstand der Erfindung, sondern das Verfahren diese Teilchen mit Hilfe von Schutzkolloid zu bei Raumtemperatur lagerstabilen Dispersionen zu verarbeiten.

Die in den erfindungsgemässen Dispersionen zu verwendenden Weichmacher sind Flüssigkeiten, die den oben angegebenen Bedingungen für Weichmacher entsprechen.

Eine grosse Zahl technisch gebräuchlicher Weichmacher geben F. Stühlen und L. Meier in «Kunststoff-Rundschau», 1972, Seiten 257 bis 260 und 316–319, K. Weinmann in «Beschichten mit Lacken und Kunststoffen», W.A. Colomb, Verlag Stuttgart 1967, Seiten 24 bis 158 sowie H. Kittel in «Lehrbuch der Lacke und Beschichtungen» (W.A. Colomb, Berlin 1976), Band IV, Seiten 301–320 an.

Auch über Funktion und Art der sogenannten Reaktivweichmacher geben die gleichen Literaturstellen Hinweise. Gebräuchliche Reaktivweichmacher sind z.B. Allylester von Mono- und Polycarbonsäuren, Acryl- und Methacrylsäureester von ein- und mehrwertigen Alkoholen und Mono- und Polyepoxide wie z.B. epoxidiertes Ricinusöl.

Die erfindungswesentliche Stabilisierung von an sich bei Raumtemperatur nicht lagerstabilen Plastisolen oder Organosolen wird durch die Verwendung von reaktiven und nichtreaktiven Schutzkolloiden bzw. entsprechenden Emulgatoren bewirkt.

Als Schutzkolloide werden höhermolekulare Stoffe bezeichnet, die eine phasentrennende Grenzflächenaktivität zwischen der kontinuierlichen und der diskontinuierlichen Phase einer Dispersion besitzen. Als Emulgatoren oder Seifen werden niedermolekularere Verbindungen bezeichnet, die die Oberflächen der dispersen Phasen belegen. Nähere Definitionen der Begriffe Schutzkolloide und Seifen finden sich z.B. bei B. Vollmert «Polymer Chemistry», Springer-Verlag, Heidelberg 1973, Seite 151 ff.

Als reaktive Schutzkolloide im Sinne der vorliegenden Erfindung sind vorzugsweise Schutzkolloide und Emulgatoren zu verstehen, die mit den sauren oder basischen Gruppen der Polymerteilchen der Plastisole oder Organosole zur Reaktion befähigt sind und dadurch an die Oberfläche der Polymerteilchen angelagert werden. Die Anlagerung der Schutzkolloide und Emulgatoren kann dabei durch polare Wechselwirkungen, Wasserstoffbrückenbindung, ionische Bindungen und hauptvalente Bindungen erfolgen.

Die an der Oberfläche der Polymerteilchen angelagerten Schutzkolloide oder Emulgatoren bilden einen Schutzbelag, der die Teilchen, obwohl sie im Weichmacher löslich oder quellbar sind, stabilisiert.

Beispiele für bevorzugte Schutzkolloide bzw. Emulgatoren für feinteilige Kunstharze, d.h. Polymerteilchen mit Säuregruppen, sind z.B. Polyamidamine (z.B. ®Euretek-Marken der Fa. Schering), Polyaminoimidazoline (z.B. ®Euredur 350, Euredur 370 oder Euredur 460 der Firma Schering), Polyetherurethanamine (z.B. Epoxid-Härter XE 70 der Firma Schering), Polyethylenimine (z.B. ®Polymin-Marken der BASF Aktiengesellschaft) oder Stearylamin.

Beispiele für bevorzugte Schutzkolloide bzw. Emulgatoren für Polymerteilchen mit Basengruppen sind z.B. Polyacrylsäure, Copolymerisate aus (Meth-)acrylester mit (Meth)acrylsäure, säureterminierte Öle, die durch Umsetzung ungesättigter natürlicher Öle, wie Leinöl, mit Meleinsäureanhydrid und anschliessender Anhydridöffnung mit Alkoholen oder Wasser erhalten werden oder Stearinsäure.

Beispiele für bevorzugte Schutzkolloide bzw. Emulgatoren, die sowohl bei basischen wie bei sauren Polymerteilchen wirksam sind, sind isocyanatgruppenterminierte Polymere die z.B. durch Umsetzung von Polyolen mit einem Überschuss an Diisocyanaten erhalten werden oder Stearylisocyanat.

Die oben genannten Schutzkolloide stellen keine einschränkende Auswahl dar, sondern sollen die Erfindung nur erläutern.

Neben den erfindungsgemässen Bestandteilen der Plastisole bzw. Organosole, nämlich Kunstharzteilchen, reaktiven und nichtreaktiven Weichmachern – im Falle der Organosole auch Lösemittel – und Schutzkolloiden bzw. Emulgatoren können gegebenenfalls Hilfsstoffe zugesetzt sein, z.B. Viskositätsregler, Sedimentationsverhüter, Verlaufsverbesserer, Riechstoffe, Netzmittel, Streckmittel und andere in der Beschichtungsstoff- und Plastisoltechnologie übliche Hilfsstoffe. Auch der Zusatz von Pigmenten und Füllstoffen organischer und/oder anorganischer Natur sowie löslicher Farbstoffe ist gegebenenfalls möglich.

Die erfindungsgemässe Plastisole können sehr vielseitige Verwendung finden. Typische Verwendungsbeispiele sind die Beschichtung von textilen Geweben für Planen und Bekleidungsstoffe, wobei die im Vergleich zu PVC bessere Lichtbeständigkeit der Acrylate besonders vorteilhaft ist, Dichtungen für Kronkorken, Antidröhnmassen, Unterbodenschutzmassen für Automobile mit besonders niedrigen Einbrenntemparaturen, Nahtabdichtungs- und Verklebungsmittel im Automobilbau, Herstellung von Formkörpern, insbesondere Spielzeug im Rotations- oder Heisstauchverfahren, Kunstlederherstellung u.v.m.

Die Verarbeitung der erfindungsgemäss hergestellten Plastisole erfolgt nach der üblichen Plastisol-Technologie.

Die folgenden Beispiele sollen die Erfindung erläutern und deren praktische Verwendbarkeit demonstrieren, ohne die Erfindung auf die genannten Stoffe, Verfahrensweisen und Anwendungen einzuschränken.

Die in den folgenden Beispielen angegebenen Teile und Prozente sind soweit nicht anders angegeben, Gewichtsteile bzw. Gewichtsprozente.

Pigmentpaste A
20,35 Teile Titandioxid, Anatasform
20,35 Teile feinteilige Pigmentkreide
 2,8  Teile Eisenoxidgelb
56,5  Teile Dioctylphthalat werden in einer Rührwerkskugelmühle auf eine Kornfeinheit von <20μm gemahlen.

Pigmentpaste B
50 Teile Titandioxid, Rutilform
47,5 Teile Dioctylphthalat
2 Teile Zeolith-Pulver
 0,5 Teile 2,4,7,9-Tetramethyl-5-decin-4,7-diol werden in einer Rührwerkskugelmühle auf eine Kornfeinheit von <10μm gemahlen.

Beispiel 1
36,1  Teile handelsübliches Copolymerisatpulver auf Basis von Acrylnitril und Styrol mit einem carboxylgehalt, der durch eine Säurezahl von 38,8 definiert ist (z.B. ®EMU-Pulver 120 FD, der BASF)
42,4 Teile Dioctylphthalat
  0,75 Teile Polyamidoamin (z.B. Euretek 505, Schering)
20.75 Teile Pigmentpaste A
werden unter kräftigem Rühren gemischt und dann an einem schnellaufenden Lackdissolver dispergiert, die Temperatur wird durch Kühlung auf max. 25°C gehalten, Grobteile werden durch Filtration über ein 100μm - Kantenspaltfilter entfernt. Es wird eine gutfliessende Paste erhalten.

Vergleichsbeispiel 1
Es wird wie bei Beispiel 1 verfahren, nur dass kein Polyamidoamin zugegeben wird. Es wird eine gutfliessende Paste erhalten.

Vergleichende Prüfung von Beispiel 1 und Vergleichsbeispiel 1
A. Filmbildung
  Die Pasten aus Beispiel 1 und Vergleichsbeispiel 1 werden mit einer 1000μm - Rakel auf elektrotauchlackgrundierte Bleche aufgerakelt. Die Bleche werden anschliessend für 20 Minuten bei 110'C gelagert. Nach dem Abkühlen auf Raumtemperatur werden zähelastische, gut haftende Filme erhalten, die z.B. als Antidröhnmasse, Dichtungsmittel oder Steinschlagschutzbeschichtung im Automobilbau Verwendung finden können.

B. Lagerstabilität

| Paste nach Beispiel | Lagerstabilität bei 23°C | |
| --- | --- | --- |
| | nach 3 Tagen | nach 3 Wochen |
| 1 | unverändert | unverändert |
| Vergleichsbeispiel 1 | stark nachverdickt nur noch schlecht aufrührbar | zu einer festen Masse erstarrt |

Beispiel 2
100 Teile des Copolymerisatpulvers aus Beispiel 1
  1 Teil Polyamidoamin, wie bei Beispiel 1, als Schutzkolloid
  60 Teile Dioctylphthalat werden am Dissolver bei max. 25°C dispergiert, dann werden
  44 Teile Pigmentpaste B untergerührt. Es wird eine weisse dickflüssige Paste erhalten.

Vergleichsbeispiel 2
Es wird wie bei Beispiel 2 verfahren, aber ohne Zusatz des Schutzkolloids.

Vergleichende Prüfung von Beispiel 2 und Vergleichsbeispiel 2
A. Filmbildung
  Auf Blechtafeln werden Teststücke eines Baumwollgewebes mit wärmefestem Klebeband befestigt, dann werden mit einer 200μm - Rakel

die Pasten aus Beispiel 2 und Vergleichsbeispiel 2 aufgerakelt und die Blechtafeln mit den darauf befestigten und beschichteten Baumwollgewebe-Teststücken 10 Minuten bei 140°C gelagert. Nach Abkühlen auf Raumtemperatur werden die Baumwollgewebestücke von der Blechtafel abgelöst, sie sind wasserdicht, klebfrei und nicht steif.
  So behandeltes Baumwollgewebe wäre z.B. zur Herstellung von Schläuchen, Wetterschutzkleidung oder Zelten geeignet.

B. Lagerstabilität

| Paste nach Beispiel | Lagerstabilität bei 23°C | |
| --- | --- | --- |
| | nach 3 Tagen | nach 2 Wochen |
| 2 | unverändert | leicht nachverdickt |
| Vergleichsbeispiel 2 | starker Viskositätsanstieg, nicht mehr rakelbar | zu einer festen Masse erstarrt |

**Patentansprüche**

  1. Verfahren zur Herstellung von bei Raumtemperatur lagerstabilen Plastisolen auf Basis von Gemischen aus feinteiligen Kunstharzen und Weichmachern, die gegebenenfalls zusätzlich Pigmente, Füllstoffe, flüchtige organische Lösungsmittel und weitere Hilfsstoffe enthalten, dadurch gekennzeichnet, dass Dispersionen von feinteiligen Vinylestercopolymerisaten und/oder (Meth)acrylestercopolymerisaten in Weichmachern, die für sich bei Raumtemperatur nicht lagerstabil sind, nichtreaktive und/oder reaktive Schutzkolloide oder Emulgatoren oder Gemische von Schutzkolloiden und Emulgatoren zugefügt werden und so bei Raumtemperatur lagerstabile Dispersionen erhalten werden.
  2. Verfahren nach Anspruch 1, dadurch gekennzeichnet, dass als feinteilige Kunstharze Copolymerisate von (Meth-)acrylverbindungen verwendet werden.
  3. Verfahren nach Anspruch 2, dadurch gekennzeichnet, dass als feinteilige Kunstharze Copolymerisate von (Meth-)acrylverbindungen verwendet werden, die überwiegend aus einpolymerisierten Einheiten von Acrylsäureestern, Methacrylsäureestern und/oder Acrylnitril aufgebaut sind, wobei diese Acryl- und Methacrylverbindungen teilweise durch andere Acryl- oder methacrylmonomere, durch Vinylaromaten sowie in untergeordneten Mengen durch andere mit (Meth-)acrylsäureestern copolymerisierbare olefinisch ungesättigte Monomere ersetzt sein können.
  4. Verfahren nach Anspruch 1, dadurch gekennzeichnet, dass als feinteilige Kunstharze Vinylestercopolymerisate verwendet werden.
  5. Verfahren nach Anspruch 1, dadurch gekennzeichnet, dass als feinteilige Kunstharze Gemische aus (Meth-)acrylpolymerisaten und Vinylestercopolymerisaten verwendet werden, wobei die feinteiligen Kunstharze für sich allein, ohne den Zusatz von Dispersionsstabilisatoren mit den nichtreaktiven und/oder reaktiven Weichmachern bei Raumtemperatur nur teilweise lagerstabile oder keine lagerstabilen Dispersionen bilden.

6. Verfahren nach einem der vorhergehenden Ansprüche, dadurch gekennzeichnet, dass als feinteilige Kunstharze solche mit sauren Gruppen verwendet werden, die eine Säurezahl von mindestens 5 aufweisen.

7. Verfahren nach Anspruch 6, dadurch gekennzeichnet, dass die sauren Gruppen Carboxylgruppen sind.

8. Verfahren nach Anspruch 6 oder 7, dadurch gekennzeichnet, dass als Dispersionsstabilisatoren basische Schutzkolloide und/oder basische Emulgatoren verwendet werden.

9. Verfahren nach einem der Ansprüche 1 bis 5, dadurch gekennzeichnet, dass das feinteilige Kunstharz basische Gruppen enthält und eine Aminzahl von mindestens 5 aufweist.

10. Verfahren nach Anspruch 9, dadurch gekennzeichnet, dass als Dispersionsstabilisatoren saure Schutzkolloide und/oder saure Emulgatoren verwendet werden.

11. Verwendung der nach einem Verfahren gemäss einem der vorhergehenden Ansprüche hergestellten Plastisole zur Beschichtung von Gegenständen.

12. Verwendung der nach einem Verfahren gemäss einem der Ansprüche 1 bis 10 hergestellten Plastisole zum Abdichten oder Verkleben.

13. Verwendung der nach einem Verfahren gemäss einem der Ansprüche 1 bis 10 hergestellten Plastisole zur Herstellung von Antidröhn- oder Unterbodenschutzmassen.

14. Verwendung der nach einem Verfahren gemäss einem der Ansprüche 1 bis 10 hergestellten Plastisole zur Herstellung von Formkörpern.

**Revendications**

1. Procédé de préparation de plastisols stables au stockage à la température ambiante, à base de mélanges de résines synthétiques en fines particules et de plastifiants, pouvant éventuellement contenir en outre des pigments, des charges, des solvants organiques volatils et d'autres adjuvants, caractérisé en ce qu'il est ajouté, à des dispersions de copolymères en fines particules d'esters vinyliques et/ou d'esters acryliques ou méthacryliques dans des plastifiants, qui en soi ne sont pas stables au stockage à la température ambiante, des colloïdes protecteurs ou des émulgateurs non réactifs et/ou réactifs ou des mélanges de colloïdes protecteurs et d'émulgateurs et en ce que l'on obtient ainsi des dispersions stables au stockage à la température ambiante.

2. Procédé suivant la revendication 1, caractérisé en ce que l'on utilise, comme résines synthétiques en fines particules, des copolymères de composés acryliques ou méthacryliques.

3. Procédé suivant la revendication 2, caractérisé en ce que l'on utilise, comme résines synthétiques en fines particules, des copolymères de composés acryliques ou méthacryliques, qui sont constitués essentiellement d'unités copolymérisées d'esters d'acide acrylique, d'esters d'acide méthacrylique et/ou d'acrylonitrile, lesdits composés acryliques et méthacryliques pouvant être remplacés partiellement par d'autres monomères acryliques ou méthacryliques, par des composés vinylaromatiques, ainsi que, en quantités moindres, par d'autres monomères oléfiniquement insaturés copolymérisables avec les esters d'acide acrylique ou méthacrylique.

4. Procédé suivant la revendication 1, caractérisé en ce que l'on utilise, comme résines synthétiques en fines particules, des copolymères d'esters vinyliques.

5. Procédé suivant la revendication 1, caractérisé en ce que l'on utilise, comme résines synthétiques en fines particules, des mélanges de copolymères acryliques ou méthacryliques et de copolymères d'esters vinyliques, les résines synthétiques en fines particules, lorsqu'elles sont utilisées seules, sans l'addition de stabilisateurs de dispersion, ne formant avec les plastifiants non réactifs et/ou réactifs, à la température ambiante, que des dispersions partiellement stables au stockage ou qui ne sont aucunement stables au stockage.

6. Procédé suivant l'une quelconque des revendications précédentes, caractérisé en ce que l'on utilise, comme résines synthétiques en fines particules, des résines à groupes acides, présentant un indice d'acide d'au moins 5.

7. Procédé suivant la revendication 6, caractérisé en ce que les groupes acides sont des groupes carboxyle.

8. Procédé suivant la revendication 6 ou 7, caractérisé en ce que l'on utilise, comme stabilisateurs de dispersion, des colloïdes protecteurs basiques et/ou des émulgateurs basiques.

9. Procédé suivant l'une quelconque des revendications 1 à 5, caractérisé en ce que la résine synthétique en fines particules comprend des groupes basiques et présente un indice d'amine d'au moins 5.

10. Procédé suivant la revendication 9, caractérisé en ce que l'on utilise, comme stabilisateurs de dispersion, des colloïdes protecteurs acides et/ou des émulgateurs acides.

11. Utilisation des plastisols préparés par un procédé suivant l'une quelconque des revendications précédentes pour l'enduction d'objets.

12. Utilisation des plastisols préparés par un procédé suivant l'une quelconque des revendications 1 à 10 pour étancher ou pour coller.

13. Utilisation des plastisols préparés par un procédé suivant l'une quelconque des revendications 1 à 10 pour la fabrication de matières anti-vrombissantes ou de masses de protection du bas de caisse.

14. Utilisation des plastisols préparés par un procédé suivant l'une quelconque des revendications 1 à 10 pour la fabrication de corps moulés.

## Claims

1. A process for the preparation of a plastisol which has a long shelf life at room temperature and is based on a mixture of a finely divided synthetic resin with a plasticizer, which may or may not contain additional pigments, fillers, volatile organic solvents and other assistants, wherein an inert and/or reactive protective colloid or emulsifier, or a mixture of these, is added to a dispersion of a finely divided vinyl ester copolymer and/or acrylate or methacrylate copolymer in a plasticizer, the dispersion as such not having a long shelf life at room temperature, and a dispersion which has a long shelf life at room temperature is thus obtained.

2. A process as claimed in claim 1, wherein the finely divided synthetic resin used is a copolymer of acrylate or methacrylate compounds.

3. A process as claimed in claim 2, wherein the finely divided synthetic resin used is a copolymer of acrylate or methacrylate compounds which predominantly consists of copolymerized units of acrylates, methacrylates and/or acrylonitrile, and these acrylate and methacrylate compounds can be partially replaced by other acrylate or methacrylate monomers, vinylaromatics and minor amounts of other olefinically unsaturated monomers which are copolymerizable with acrylates and methacrylates.

4. A process as claimed in claim 1, wherein the finely divided synthetic resin used is a vinyl ester copolymer.

5. A process as claimed in claim 1, wherein the finely divided synthetic resin used is a mixture of acrylate or methacrylate copolymers and vinyl ester copolymers, the finely divided synthetic resin alone, without the addition of a dispersion stabilizer, forming together with the inert and/or reactive plasticizer a dispersion which is unstable or has only a short shelf life at room temperature.

6. A process as claimed in any of the preceding claims, wherein the finely divided synthetic resin used is one which contains acidic groups and has an acid number of not less than 5.

7. A process as claimed in claim 6, wherein the acidic groups are carboxyl groups.

8. A process as claimed in claim 6 or 7, wherein the dispersion stabilizer used is a basic protective colloid and/or a basic emulsifier.

9. A process as claimed in any of claims 1 to 5, wherein the finely divided synthetic resin contains basic groups and has an amine number of not less than 5.

10. A process as claimed in claim 9, wherein the dispersion stabilizer used is an acidic protective colloid and/or an acidic emulsifier.

11. Use of a plastisol prepared by a process as claimed in any of the preceding claims for coating articles.

12. Use of a plastisol prepared by a process as claimed in any of claims 1 to 10 for sealing or adhesive bonding.

13. Use of a plastisol prepared by a process as claimed in any of claims 1 to 10 for the preparation of antidrumming materials or automotive undersealants.

14. Use of a plastisol prepared by a process as claimed in any of claims 1 to 10 for the production of moldings.